# EUROPEAN PATENT APPLICATION

(11) **EP 1 676 872 A1**
(43) Date of publication of application: **05.07.2006**
(21) Application number: 04773777.0
(22) Date of filing: 08.10.2004
(51) Int. Cl.: C08J 3/12, C08L 53/00

(54) **METHOD FOR PRODUCING POWDER FOR SLUSH MOLDING**

(30) Priority: 22.10.2003 JP 2003361910
(71) Applicant: KANEKA CORPORATION, Osaka-shi, Osaka 530-8288 (JP)
(72) Inventor: HIROTA, Akihisa, Settsu-shi Osaka 5660072 (JP)
(74) Representative: Vossius & Partner
(86) International application number: PCT/JP2004/015326
(87) International publication number: WO 2005/040252

(57) **Abstract**

A simple method for producing a powder comprising a thermoplastic elastomer composition suitable for powder slush molding is provided. This is achieved by means of a method for producing a powder for slush molding obtained by pulverization of a thermoplastic elastomer, **characterized in that** pulverization is performed by means of the shearing action of a fixed blade and a rotating blade. In particular, a specific acrylic block copolymer and a composition thereof can be favorably used for the thermoplastic elastomer composition.

## Description

### TECHNICAL FIELD

The present invention relates to a method for producing a powder suitable for powder slush molding, comprising thermoplastic elastomer composition. More specifically, it relates to a method for producing a powder comprising a composition including an acrylic block copolymer.

### BACKGROUND ART

Acrylic block copolymers having methyl methacrylate and the like as hard segments and butyl acrylate and the like as soft segments are known to have the properties of thermoplastic elastomers. For example, Japanese Patent No. 2553134 describes the mechanical properties of an acrylic block copolymer produced by the iniferter method which has a methacrylic polymer block and an acrylic polymer block.

Acrylic block copolymers have the properties of excellent weather resistance, heat resistance, durability and oil resistance. By appropriate selection of the components making up the block copolymers it is also possible to obtain an elastomer having much more flexible than other thermoplastic elastomers such as styrene block copolymers.

It is anticipated that skin materials for automotive interior will be developed as an application utilizing these properties of acrylic block copolymers. The primary method of forming such skin materials is powder slush molding, in which a resin powder as a raw material is filled into a forming mold, and a skin formed by melt-molded resin powder is removed from the mold after a pre-determined time. A skin material obtained by such a forming method may be contaminated by pinholes or bubble inclusions depending on the fluidity, the particle size, the particle size distribution and other conditions of the raw material resin powder.

As a technique for producing a powder suitable for powder slush molding, a method has been disclosed of producing a powder comprising thermoplastic elastomer composition with a mean particle size of 700 µm or less (sphere conversion) by an underwater cut process (for example, Japanese Patent Application Laid-open No. 2002-166417). In this method, a die temperature of 230 to 350°C is specified so as to allow extrusion from a die having fine openings, but at this temperature range the methacrylic polymer blocks are liable to thermal decomposition.

As a method for producing a powder suitable for powder slush molding, a method has also been disclosed of producing a powder by pulverization after being frozen using liquid nitrogen (for example, Japanese Patent Application Laid-open No. H5-005050). Pulverization at a very low temperature is an effective method to employ when pulverizing a soft thermoplastic elastomer in an ordinary impact pulverizer. However, many cost problems arise when considering production on an industrial scale. Moreover, a form of a powder obtained by pulverization using mechanical impact is generally irregular, so that the particle size needs to be made extremely fine for purposes of application to powder slush molding, in which fluidity of the powder is emphasized.

As a method of improving the particle form of a pulverized powder, a method has been disclosed of heating the powder in a weak solvent or aqueous solution of emulsifier to at or above the melting temperature of the resin, and forming it into spheres (for example, Japanese Patent Application Laid-open No. H8-225654). However, there are many problems for practical use considering the complicated equipment required for draining the aqueous solution of emulsifier, dehydrating/drying the powder and the like.

In addition, a method has been disclosed of heating a mixture of an organic solvent solution of the resin and an aqueous solution of emulsifier to produce a resin powder using the azeotropy of the organic solvent and water (for example, Japanese Patent Application Laid-open No. H11-256032). However, this method requires complex equipment, presenting problems from the standpoint of cost in the same way as above.

Pulverizers are known to take a variety of forms depending on the particle size of the resulting powder and the nature of the raw materials of the powder (for example, Kagakukogaku Binran (chapter on pulverization) 1999, Maruzen, pp. 842-852). In general a variety of types of impact pulverizers are used, such as turbo mills, pin mills, hammer mills and the like. However, because thermoplastic elastomers are soft and elastic, they are extremely hard to pulverize with impact-type pulverizers. The problem with applying impact-type pulverizers to thermoplastic elastomers is that it is necessary to firstly pulverize the elastomer frosen by liquid nitrogen or the like in order to make it more brittle as described above.

### DISCLOSURE OF THE INVENTION

The present invention provides a method for easily producing a powder comprising a thermoplastic elastomer composition suitable for powder slush molding, in particular comprising an acrylic block copolymer composition.

As a result of exhaustive research into methods for producing powders comprising thermoplastic elastomer compositions, the inventors perfected the present invention when they discovered that a pulverization system using the shearing action of a fixed blade and a rotating blade is useful, and that when using a composition comprising an acrylic block copolymer, stable production can be achieved by selection of the types of additives added to the powder surface and the composition of monomers making up the copolymer.

That is, the present invention relates to a method for producing a powder for slush molding obtained by pulverizing a thermoplastic elastomer composition, wherein pulverization is performed by shearing action of a fixed blade and a rotating blade.

A preferred embodiment relates to a method for producing a powder for slush molding wherein the thermoplastic elastomer composition is a composition comprising an acrylic block copolymer (A).

A preferred embodiment relates to a method for producing a powder for slush molding wherein 2 to 20 parts by weight of at least one selected from the group consisting of calcium carbonate, talc, kaolin, silicon dioxide, fatty acid amides, fatty acid esters and metal soaps is added externally to 100 parts by weight of the composition comprising the acrylic block copolymer (A) before pulverization.

A preferred embodiment relates to a method for producing a powder for slush molding wherein the acrylic block copolymer (A) is a block copolymer consisting of 50 to 90% by weight of an acrylic polymer block (a) and 50 to 10% by weight of a methacrylic polymer block (b).

A preferred embodiment relates to a method for producing a powder for slush molding wherein the acrylic polymer block (a) is a block formed by polymerization of a monomer having as its principal component at least one selected from the group consisting of n-butyl acrylate, ethyl acrylate, 2-methoxyethyl acrylate and 2-ethylhexyl acrylate, while methacrylic polymer block (b) is a block formed by polymerization of a monomer having methyl methacrylate as its principal component.

A preferred embodiment relates to a method for producing a powder for slush molding wherein the composition comprising the acrylic block copolymer (A) comprises 10 to 100 parts by weight of calcium carbonate powder based on 100 parts by weight of the acrylic block copolymer (A).

A preferred embodiment relates to a method for producing a powder for slush molding wherein the composition comprising the acrylic block copolymer (A) comprises 0.1 to 10 parts by weight of silicone oil based on 100 parts by weight of the acrylic block copolymer (A).

A preferred embodiment relates to a method for producing a powder for slush molding wherein 2 to 20 parts by weight of water based on 100 parts by weight of the composition comprising the acrylic block copolymer (A) is supplied during pulverization.

Use of the method of the present invention allows a powder comprising a thermoplastic elastomer composition suitable for powder slush molding to be easily produced.

### BRIEF DESCRIPTION OF THE DRAWINGS

Figure 1 is a diagram of a pulverizer used in the present invention.
Figure 2 is a diagram of a pulverizer used in the present invention.

In the figures, 1 indicates an electromagnetic feeder, 2 a pulverizer, 3 a cyclone, 4 a blower, 5 a bag filter, and 6 a constant rate pump respectively.

### BEST MODE FOR CARRYING OUT THE INVENTION

The present invention is explained in more detail below.

The present invention is a method for producing a powder for slush molding obtained by pulverizing a thermoplastic elastomer composition, wherein pulverization is performed by means of the shearing action of a fixed blade and a rotating blade. An acrylic block copolymer (A) alone or a composition comprising the acrylic block copolymer (A) can be favorably used as the thermoplastic elastomer composition in the present invention, but thermoplastic elastomers such as polyester elastomer, polyurethane elastomer, polyolefin elastomer, polystyrene elastomer, polyamide elastomer, silicone elastomer and fluorine polymers elastomer alone or a composition comprising the elastomers can also be used.

### -Acrylic block copolymer (A)-

Structurally, the block copolymer (A) may be a linear block copolymer, a branched (star-shaped) block copolymer, or a mixture thereof. The structures of the block copolymer can be selected depending on what properties are required, but a linear block copolymer is preferred from the standpoint of cost and ease of polymerization.

The aforementioned linear block copolymer may have any kinds of linear block structure, but from the standpoint of the properties of the block copolymer or a composition including the block copolymer, the acrylic block copolymer (A) composed of an acrylic polymer block (a) (hereinafter called a polymer block (a) or a block (a)) and a methacrylic polymer block (b) (hereinafter called a polymer block (b) or a block (b)) is at least one type of the block copolymer selected from the group of block copolymers represented by general formula (a-b)ₙ, general formula b-(a-b)ₙ and general formula (a-b)ₙ-a (with n being an integer between 1 and 3). Of these, the a-b di-block copolymer or the b-a-b tri-block copolymer or a mixture thereof is desirable considering ease of handling during processing and the properties of the resulting composition.

There are no particular limits on the number-average molecular weight of the block copolymer (A) as measured by gel permeation chromatography, but preferably it is 30,000 to 500,000 or more preferably 50,000 to 400,000. When the number-average molecular weight is low, the viscosity tends to be low, and when the number-average molecular weight is high, the viscosity tends to be high, so the number-average molecular weight of the block copolymer (A) can be set according to the required processability.

The ratio (Mw/Mn) of the weight-average molecular weight (Mw) to the number-average molecular weight (Mn) of the block copolymer as measured by gel permeation chromatography, is not particularly limited, but the ratio is preferably no more than 1.8 or more preferably no more than 1.5. When the Mw/Mn exceeds 1.8, the block copolymer tends to be less homogenous.

In the component ratio of the methacrylic polymer block (b) to the acrylic polymer block (a) in the block copolymer (A), it is preferable that the block (b) constitutes 5% to 90% by weight and the block (a) constitutes 95% to 10% by weight. From the standpoint of maintaining shape during molding and considering the elasticity of the composition, the ratio of the block(b) and the block(a) is preferably 10 to 80% by weight and 90 to 20% by weight, more preferably 10 to 50% by weight and 90 to 50% by weight. When the amount of the block(b) falls below 5% by weight it tends to be more difficult to maintain shape during molding, and when the amount of the block(a) falls below 10% by weight the composition tends to be less elastic and harder to melt during molding.

Considering the hardness of the elastomer composition, when the amount of the block(b) is smaller, the hardness tends to be lower, and the amount of the block(b) is larger, the hardness tends to be higher. The amount of the block(b) can be set depending on the required hardness of the elastomer composition. For processability, when the amount of the block(b) is smaller, the viscosity tends to be lower, and the amount of the block(b) is larger, the viscosity tends to be higher. The amount of the block(b) can be set depending on the necessary processability.

### -Acrylic polymer block (a)-

The acrylic polymer block (a) is a block formed by polymerization of a monomer having an acrylic ester as its principal component, and preferably consists of 50 to 100% by weight of an acrylic ester and 0 to 50% by weight of a vinyl monomer copolymerizable with the acrylic ester.

Examples of the acrylic ester making up the acrylic polymer block (a) include for example methyl acrylate, ethyl acrylate, n-propyl acrylate, isopropyl acrylate, n-butyl acrylate, isobutyl acrylate, t-butyl acrylate, n-pentyl acrylate, n-hexyl acrylate, cyclohexyl acrylate, n-heptyl acrylate, n-octyl acrylate, 2-ethylhexyl acrylate, nonyl acrylate, decyl acrylate, dodecyl acrylate, phenyl acrylate, toluyl acrylate, benzyl acrylate, isobornyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-aminoethyl acrylate, acrylic acid ethylene oxide addition product, trifluoromethylmethyl acrylate, 2-trifluoromethylethyl acrylate, 2-perfluoroethylethyl acrylate, 2-perfluoroethyl-2-perfluorobutylethyl acrylate, 2-perfluoroethyl acrylate, perfluoromethyl acrylate, diperfluoromethylmethyl acrylate, 2-perfluoromethyl-2-perfluoroethylmethyl acrylate, 2-perfluorohexylethyl acrylate, 2-perfluorodecylethyl acrylate and 2-perfluorohexadecylethyl acrylate.

These can be used alone or 2 or more can be used in combination. Of these, n-butyl acrylate is desirable from the standpoint of balancing rubber elasticity, low-temperature properties and cost. When low-temperature properties, mechanical properties and compression set are required, 2-ethylhexyl acrylate can be copolymerized. When oil resistance and mechanical properties are required, ethyl acrylate is desirable. When low-temperature properties and oil resistance are required and the surface tackiness of the resin needs to be improved, 2-methoxyethyl acrylate is desirable. When the oil resistance and low-temperature properties need to be balanced, a combination of ethyl acrylate, n-butyl acrylate and 2-methoxyethyl acrylate is desirable. To improve heat resistance, t-butyl acrylate is desirable as a precursor when introducing acid anhydride groups.

Examples of the vinyl monomer which is copolymerizable with the acrylate ester making up the acrylic polymer block (a) include methacrylic acid esters, aromatic alkenyl compounds, vinyl cyanide compounds, conjugate diene compounds, halogen-containing unsaturated compounds, silicon-containing unsaturated compounds, unsaturated dicarboxylic acid compounds, vinyl ester compounds, maleimide compounds and the like.

Examples of methacrylic acid esters include methyl methacrylate, ethyl methacrylate, n-propyl methacrylate, isopropyl methacrylate, n-butyl methacrylate, isobutyl methacrylate, methacrylate, n-pentyl methacrylate, n-hexyl methacrylate, cyclohexyl methacrylate, n-heptyl methacrylate, n-octyl methacrylate, 2-ethylhexyl methacrylate, nonyl methacrylate, decyl methacrylate, dodecyl methacrylate, phenyl methacrylate, toluyl methacrylate, benzyl methacrylate, isobornyl methacrylate, 2-methoxyethyl methacrylate, 3-methoxybutyl methacrylate, 2-hydroxyethyl methacrylate, 2-hydroxypropyl methacrylate, stearyl methacrylate, glycidyl methacrylate, 2-aminoethyl methacrylate, γ-(methacryloyloxypropyl)trimethoxysilane, γ-(methacryloyloxypropyl)dimethoxyymethylsilane, methacrylic acid ethyleneoxide addition product, trifluoromethylmethyl methacrylate, 2-trifluoromethylethyl methacrylate, 2-perfluoroethylethyl methacrylate, 2-perfluoroethyl-2-perfluorobutylethyl methacrylate, 2-perfluoroethyl methacrylate, perfluoromethyl methacrylate, diperfluoromethylmethyl methacrylate, 2-perfluoromethyl-2-perfluoroethylmethyl methacrylate, 2-perfluorohexylethyl methacrylate, 2-perfluorodecylethyl methacrylate, 2-perfluorohexadecylethyl methacrylate and the like.

Examples of aromatic alkenyl compounds include styrene, α-methylstyrene, p-methylstyrene, p-methoxystyrene and the like. Examples of vinyl cyanide compounds include acrylonitrile, methacrylonitrile and the like. Examples of conjugate diene compounds include butadiene, isoprene and the like. Examples of halogen-containing unsaturated compounds include vinyl chloride, vinylidene chloride, perfluoroethylene, perfluoropropylene, vinylidene fluoride and the like. Examples of silicon-containing unsaturated compounds include vinyl trimethoxysilane, vinyl triethoxysilane and the like. Examples of unsaturated dicarboxylic acid compounds include maleic anhydride, maleic acid, maleic acid monoalkyl ester and dialkyl ester, fumaric acid, fumaric acid monoalkyl ester and dialkyl ester and the like. Examples of vinyl ester compounds include vinyl acetate, vinyl propionate, vinyl pivalate, vinyl benzoate, vinyl cinnamate and the like. Examples of maleimide compounds include maleimide, methyl maleimide, ethyl maleimide, propyl maleimide, butyl maleimide, hexyl maleimide, octyl maleimide, dodecyl maleimide, stearyl maleimide, phenyl maleimide, cyclohexyl maleimide and the like.

These can be used alone or two or more can be used in combination. Of these vinyl monomers, the most desirable can be selected from the standpoint of a balance such as the required glass transition temperature and oil resistance of the acrylic polymer block (a), compatibility with the methacrylic polymer block (b) and the like.

Considering the rubber elasticity of the elastomer composition, the glass transition temperature of the acrylic polymer block (a) should be 25°C or less, preferably 0°C or less, and more preferably -20°C or less. A disadvantage is that rubber elasticity will be hard to achieve if the glass transition temperature of the acrylic polymer block (a) is higher than the temperature of the environment in which the elastomer composition is used.

### -Methacrylic polymer block (b)-

The methacrylic polymer block (b) is a block formed by polymerization of a monomer having a methacrylic acid ester as its principal component, and preferably consists of 50 to 100% by weight of a methacrylic acid ester and 0 to 50% by weight of a vinyl monomer copolymerizable with the methacrylic acid ester.

The methacrylic acid ester making up the methacrylic polymer block (b) may be, for example, the same methacrylic acid esters given as examples of a vinyl monomer copolymerizable with the acrylic acid ester making up the acrylic polymer block (a).

These can be used alone or two or more can be used in combination. Of these, methyl methacrylate is desirable from the standpoint of workability, cost and availability. The glass transition temperature can be raised by copolymerizing isobornyl methacrylate, cyclohexyl methacrylate or the like. Furthermore, for purposes of improving heat resistance, it is desirable to use t-butyl methacrylate as a precursor when introducing an acid anhydride.

Examples of the vinyl monomer copolymerized with the methacrylic acid ester making up the methacrylic polymer block (b) include acrylic acid esters, aromatic alkenyl compounds, conjugate diene compounds, halogen-containing unsaturated compounds, silicon-containing unsaturated compounds, unsaturated dicarboxylic acid compounds, vinyl ester compounds, maleimide compounds and the like.

Examples of acrylic acid esters include the same acrylic acid esters given as examples of the acrylic acid ester making up the acrylic polymer block (a).

Examples of aromatic alkenyl compounds, vinyl cyanide compounds, conjugate diene compounds, halogen-containing unsaturated compounds, silicon-containing unsaturated compounds, unsaturated dicarboxylic acid compounds, vinyl ester compounds and maleimide compounds include the same as those given as examples of the monomer making up the acrylic polymer block (a).

These can be used alone or two or more can be used in combination. Of these vinyl monomers, the most desirable can be selected for purposes of adjusting the glass transition temperature required for the methacrylic polymer block (b), achieving compatibility with the acrylic polymer block (a) and the like.

Considering the thermal deformation of the elastomer composition, the glass transition temperature of the block(b) should be 25°C or more, preferably 40°C or more, and more preferably 50°C or more. When the glass transition temperature of the block(b) is lower than the temperature of the environment in which the elastomer composition is used, the composition may be thermally deformable due to lowered cohesive strength.

### -Method for manufacturing block copolymer (A)-

There are no particular limits on the method for manufacturing the acrylic block copolymer (A), but it is desirable to use controlled polymerization. Examples of controlled polymerization include living anionic polymerization, radical polymerization using a chain transfer agent and the recently-developed living radical polymerization. Living radical polymerization is desirable from the standpoint of controlling the structure and molecular weight of the block copolymer and copolymerizing a monomer having a crosslinking functional group.

In a narrow sense, living polymerization means polymerization in which the terminal activity is maintained, but in the general sense it includes pseudo-living polymerization in which inactivated terminal and activated terminal are in an equilibrium state. In the present invention, living polymerization means radical polymerization in which inactivated terminal and activated terminal are in an equilibrium state. It has been actively studied in recent years by a number of groups.

Examples include those using chain transfer agents such as polysulfide and those using radical capture agents *(Macromolecules,* 1994, 27, 7228) such as cobalt porphyrin complexes *(Journal of the American Chemical Society,* 1994, 116, 7943) and nitroxide compounds, as well as atom transfer radical polymerization (ATRP: Atom Transfer Radical Polymerization) using an organic halide or the like as the initiator and a transitional metal complex as the catalyst. There are no particular limits on these methods used in the present invention, but atom transfer radical polymerization is preferred from the standpoint of ease of control and the like.

In atom transfer radical polymerization, polymerization is accomplished using as an initiator an organic halide or sulfonyl halide compound and as a catalyst a metal complex having as its central metal selected from the elements of Groups VIII, IX, X, or XI of the periodic system (refer to, for example, Matyjaszewski et al, *Journal of the American Chemical Society,* 1995, 117, 5614; *Macromolecules,* 1995, 28, 7901; *Science,* 1996, 272, 866; or Sawamoto et al, *Macromolecules,* 1995, 28, 1721).

Using these methods the polymerization rate is generally extremely fast, and while the reaction is a radical reaction which easily occurs termination reactions such as coupling between radicals, polymerization progresses in a living state to produce a polymer with a molecular weight distribution in the narrow range of about Mw/Mn = 1.1 to 1.5. The molecular weight can be controlled at will according to the proportions of the supplied monomer and initiator.

In atom transfer radical polymerization, the organic halide or sulfonyl halide compound as an initiator may be a monofunctional, bifunctional or polyfunctional compound. These can be selected according to the objective. When manufacturing a di-block copolymer, a monofunctional compound is desirable. When manufacturing an a-b-a tri-block copolymer or a b-a-b tri-block copolymer, a bifunctional compound is desirable. When manufacturing a branched block copolymer, a polyfunctional compound is desirable.

There are no particular limits on the transition metal complex used as the catalyst in the atom transfer radical polymerization, but desirable examples include complexes of mono-valent or zero-valent copper, di-valent ruthenium, di-valent iron or di-valent nickel. Of these, a copper complex is desirable from the standpoint of cost and reaction control.

The atom transfer radical polymerization can be performed without a solvent (bulk polymerization) or in various solvents. When using a solvent, the amount of the solvent can be determined appropriately according to the relationship between the viscosity of the system as a whole and the required stirring efficiency.

The atom transfer radical polymerization can be performed in the range of room temperature to 200°C or preferably 50 to 150°C. When the temperature for the atom transfer radical polymerization is lower than room temperature, viscosity will be too high and the reaction speed will be retarded in some cases, and when it exceeds 200°C it may not be possible to use inexpensive polymerization solvents.

The reaction solution obtained from polymerization contains a mixture of the polymer and metal complex. The metal complex can be removed, for example, by addition of an organic acid. Next, impurities can be removed by adsorption treatment to obtain a solution containing an acrylic block copolymer. There are no particular limits on the organic acid used in the present invention, but preferably it is an organic acid having a carboxylic acid group or sulfonic acid group.

When isolating the organic solvent by evaporation from the acrylic block copolymer solution, various types of thin-film evaporators can be used which remove, in other words evaporate, volatilize or the like, volatile components by heating the liquid film of the polymer solution. Evaporation can also be accomplished with an extruder having a uniaxial or biaxial screw and a volatilization port.

The amount of residual solvent in the resin is preferably no more than 10,000 ppm. It is not desirable for the residual solvent to exceed 10,000 ppm from the viewpoint of the environmental burden and the deterioration of the working environment by solvent odor.

An acrylic block copolymer (A) from which the organic solvent has been separated by evaporation can then be made into a form suitable for pulverization process by way of palletizing or the like. A method of extruding the resin in a molten state as strands from a die having desired sized openings and then cooling it and cutting and working it into pellets can be adopted as the pelletizing system. In addition, a hot cut system in which the polymer is cut by a rotating blade rotating at high speeds near the die or an underwater cut system in which a similar process is carried out under water can be adopted.

An antioxidant can be included during the process of volatilizating solvents from the resin solution as a means of preventing debasement of quality due to the heat history during evaporatiing the polymer solution and melting in the extruder. These antioxidants preferably also function as radical chain terminators. There are no particular limits on the antioxidants, but examples include phenol antioxidants, amine antioxidants and the like.

### -Powder manufacture-

The thermoplastic elastomer composition is pulverized by the shearing action of a fixed blade and a rotating blade. The acrylic block copolymer (A), which has been pelletized as described above, and the composition thereof, are pulverized in a pulverizer using the shearing action of a fixed blade and a rotating blade. The pulverizer of this type is explained in detail below.

In the pulverizer the resin is pulverized by the shearing action. Two different types of discs, a fixed disc and a rotating disc, are used to produce this shearing action. The fixed disc and rotating disc are placed with a certain clearance between the two. The shearing force is generated by the difference of speed between the fixed disc and rotating disc, and the size of the clearance. The raw material for pulverization is supplied through the center of the disc, and as it is pulverized by the shearing action, it moves to the outer circumference of the disk by centrifugal force, and it is retrieved.

The greater the shearing force during pulverization is, and the smaller the clearance is, the greater the pulverization ability is, and a powder of a very small size can be obtained. Consequently, powders of various sizes can be obtained by adjusting the rotating speed of the rotating disc and the clearance of the discs, particularly the clearance of the outer circumference, which determines the maximum size of the resulting powder.

The shape and arrangement of the blades on the disc surface are important as a means of controlling the shape of the resulting powder. In particular, it is desirable that the blade is placed with slightly slant rather than being parallel to a line elongated from the center to the outer circumference of the disc. When the blade is placed parallel to the line elongated from the center of the disc to the outer circumference, pulverizing ability is lower because the path of the disc is perpendicular to the blades.

Another important factor is eliminating frictional heat generated during pulverization. When frictional heat builds up, it raises the temperature of the resin on the disc surface, softening the resin. When the resin becomes soft, the pulverized resin becomes long fiber by shearing action, which may result in a powder with insufficient fluidity for powder slush molding. If the temperature rises still further, the resin melts and remains on the disc surface, making pulverization impossible. Consequently, temperature control during pulverization is an extremely important factor for powder quality and operation stability.

Air cooling is an effective means of removing frictional heat. In this system, there are no particular limits on the system for supplying the raw material pellets to the pulverizer, which may be an air conveyor system which conveys them on a flow of air inside a cylindrical pipe, another conveyor system, a screw feeder system or the like, but an air conveyor system is the most desirable because the air can be used as a cooling medium. In this case, the cooling ability is determined by the flow volume and temperature of the air. Because the air-flow volume is determined according to the supply stability of the raw materials and the transport stability of the pulverized product, actual operations are regulated by means of the air temperature. In the present invention, an air temperature of 10 to 50°C is desirable. Under 10°C, although cooling ability is enough, an expensive cooling system is required. In the temperature range above 50°C, melting of the resin cannot be prevented, and it becomes necessary to greatly reduce the processing volume so as to prevent the occurrence of frictional heat.

In addition, a small amount of water can be added to the raw material pellets to prevent the temperature rise by means of the latent heat of vaporization of the water. There are no particular limits on the method of supplying the water, which may be added in advance to the raw material for pulverization or supplied to the pulverizer separately from the raw materials. When the water is added in advance, when the raw material pellets are manufactured, the residual water adhering to the pellets can be used as is. When the water is supplied to the pulverizer separately, an ordinary constant rate pump can be used. There are no particular limits on the shape of the supply outlet, but from the standpoint of supplying water uniformly while efficiently preventing the occurrence of static electricity, the water is preferably supplied as a spray via a nozzle.

The amount of water added can be stipulated as number of parts by weight relative the raw material for pulverization. The amount of water added is preferably 2 to 20 parts by weight per 100 parts by weight of the raw material for pulverization. Below 2 parts by weight, the cooling effect of the water and the ability to prevent static electricity is not enough. On the other hand, above 20 parts by weight un-evaporated water remains in the powder, adversely affecting product quality. The handling properties of the pulverized powder are also adversely affected.

The water added may be pure water, tap water, industrial water or the like.

When water is used for cooling, moisture control is necessary to prevent the product from being adversely affected by residual moisture.

The pulverized thermoplastic elastomer is liable to softening and adhesion between particles due to the heat occurring during pulverization. Adhesion between particles is also likely because powdered products in general, not just thermoplastic elastomers, have a high specific surface area. When this happens it not only greatly reduces the fluidity which is a required property of the pulverized powder is, but can also be expected to interfere with stable operation due to adhesion of resin inside the equipment and the like.

One method of preventing adhesion between particles would be to add various powders for preventing adhesion between particles to the surface of the pellets or the like before pulverization. 2 to 20 parts by weight of at least one selected from the group consisting of calcium carbonate, talc, kaolin, silicon dioxide, fatty acid amides, fatty acid esters and metal soaps can be added externally to 100 parts by weight of a composition comprising acrylic block copolymer (A). Adding externally here means addition as by sprinkling on the surface of the pellets or the like rather than kneading into the composition. Below 2 parts by weight the effects are inadequate, while above 20 parts by weight the mechanical properties of the resulting powder are adversely affected.

There are no particular limits on the addition method, and examples include mixing in a blender or adding to the air flow during transport.

The aforementioned powders for preventing adhesion between particles can also be added to the pulverized product with the object of improving the handling properties or conferring anti-blocking properties. As in the case of external addition to the surface of the pellets, a system can be adopted for mixing with the pulverized product in a blender, adding to the flow of air during transport, or adding inside a vibrating sieve or the like. It is also effective to disperse or dissolve it in the cooling water supplied to the pulverizer as described above.

Examples of calcium carbonate include not only simple substances such as light calcium carbonate with a mean particle size of 0.5 to 15 µm and heavy calcium carbonate, but also calcium carbonate treated with saturated fatty acids or surfactants, and calcium carbonate mixed with magnesium, silicate or the like.

Examples of fatty acid amides include stearamide, ethylene bis stearamide, erucamide, ethylene bis erucamide, oleamide, ethylene bis oleamide, behenamide, ethylene bis lauramide and the like.

Examples of fatty acid esters include methyl laurate, methyl myristate, methyl palmitate, methyl stearate, methyl oleate, methyl erucate, methyl behenate, butyl laurate, butyl stearate, isopropyl myristate, isopropyl palmitate, octyl palmitate, octyl stearate and the like.

Examples of metal soaps include various metal soaps using potassium, sodium, aluminum, calcium, zinc, magnesium, barium and the like.

From the standpoint of not only preventing adhesion between particles but also making pulverization easier by raising the softening point of the composition, it can be employed a method to form a composition in advance by mixing the acrylic block copolymer (A) with an inorganic filler before pulverization. Examples of inorganic fillers include titanium oxide, zinc sulfide, zinc oxide, carbon black, calcium carbonate, calcium silicate, clay, kaolin, silica, mica powder, alumina, glass fiber, metal fiber, kalium titanate whiskers, asbestos, wollastonite, mica, talc, glass flakes, milled fiber, metal powder and the like, but are not limited to these. These may be used alone or more than one may be used in combination. Of these, it is especially preferable to use calcium carbonate.

The added amount of these inorganic fillers is preferably 10 to 100 parts by weight per 100 parts by weight of the acrylic block copolymer (A). Below 10 parts by weight the effects are insufficient to prevent adhesion between particles, while above 100 parts by weight the mechanical properties of the composition may be adversely affected.

Another effective means is to compound the acrylic block copolymer with silicone oil, beef fat super-hardened oil, various waxes, carbon black or the like. These additives can be used alone or more than one may be combined. Of these, it is especially preferable to use silicone oil. The added amount can be selected to balance the properties of the formed product, but 0.1 to 10 parts by weight per 100 parts by weight of the acrylic block copolymer (A) is desirable. Below 0.1 parts by weight the effects are insufficient to prevent adhesion between particles, while above 10 parts by weight mechanical properties of the composition may be adversely affected as in the case of the aforementioned inorganic fillers.

Before pulverization the raw material is typically in pellet form as described above, and often these pellets are preferably cylindrical with a size of preferably φ 1 to 10 mm in diameter, 1 to 10 mm in height. Pellets larger than this can be handled by multi-stage pulverization depending on the target particle size.

The powder obtained by the aforementioned methods preferably has a bulk density of 0.4 to 0.8 8 g/mL and an angle of repose of 25 to 45°. When the bulk density is low, there will be more bubbles in the molded product after powder slush molding. When the angle of repose is high, the powder thickness inside the mold and the resulting resin pressure occurring on the heated surface will fluctuate, making it difficult to obtain a molded body of a uniform thickness. If the particles are roughly spherical, the particle size of the powder is preferably 500 µm or less. When they are irregular such as polygonal, threadlike or otherwise, the maximum length of the particles is preferably 1000 µm or less.

### (Examples)

The present invention is explained in more detail based on examples, but the present invention is not limited by these examples.

### -Measurement method of Molecular weight-

Molecular weights given in these examples were measured with a GPC analyzer as shown below, and converted to polystyrene values with chloroform as the moving phase. With regard to the system, a GPC system of WATERS was used along with a Shodex K-804 of SHOWA DENKO K.K. (polystyrene gel) column.

### -Measurement method of Polymerization reaction conversion rate-

The polymerization reaction conversion rates given in these examples were measured using the analytic equipment and conditions given below.
Equipment: Gas Chromatograph GC-14B of SHIMADZU CORPORATION
Separation column: Capillary Column Supelcowax-10, 0.35 mm φ X 30 m of J & W SCIENTIFIC INC.,
Separation conditions:
   Initial temperature 60°C, retained for 3.5 minutes
   Programming rate: 40°C/min
   Final temperature: 140°C, retained for 1.5 minutes
   Injection temperature: 250°C
   Detector temperature: 250°C
Sample preparation: Samples were diluted about 3 times with ethyl acetate, and butyl acetate was used as the internal standard substance.

### -Evaluation of powder properties of powder-

The various powder properties of the powders in these examples were measured with the following analytic equipment.
Equipment: Powder Tester PT-R of HOSOKAWA MICRON CORPORATION
-Measurement of surface electric potential of powder-

The surface electric potential of the powders given in these examples was obtained with the following measuring equipment.
Equipment: Surface Electric Potential Meter KSD-0103 of KASUGA ELECTRIC WORKS LTD.
-Evaluation of melting properties of powder-

The melting properties of the powder given in these examples were evaluated by the method given below.
Equipment: Skin embossed metal plate (thickness 4.5 mm, crimp depth 80%)
Heating conditions: 250°C
Heating time: 1 minute
Cooling time: 5 minutes (air cooled in air)

### Evaluation criteria

Embossing transfer (visual): O (good), X (improperly formed in some places

Uniformity of skin thickness (visual): O (uniform), X (irregular, powder remaining)

Pinholes/bubbles (visual): O (none), X (present) (Manufacturing Example 1)

53.7 kg of butyl acrylate, 27.2 kg of 2-methoxyethyl acrylate and 0.649 kg of cuprous bromide were placed in a reaction vessel of 500 L substituted with nitrogen, and agitation was initiated. Then Warm water was supplied to the jacket to raise the temperature of the solution inside to 70°C, at which it was retained for 30 minutes. A solution of 0.905 kg of diethyl 2,5-dibromoadipate dissolved in 6.82 kg of acetonitrile was added, and a temperature rise to 75°C was initiated. Once the inner temperature had reached 75°C, 94.5 mL of pentamethyldiethylenetriamine was added to initiate polymerization to obtain the first block.

Once the conversion rate reached 95%, 79.1 kg of toluene, 0.448 kg of cuprous chloride, 43.5 kg of methyl methacrylate and 94.5 mL of pentamethyldiethylenetriamine were added to initiate polymerization to obtain the second block. Once the conversion rate reached 90%, 104 kg of toluene was added to dilute the reaction solution and terminate polymerization by cooling the reaction vessel. In GPC analysis, the resulting block copolymer had a number-average molecular weight Mn of 67152 and a molecular weight distribution Mw/Mn of 1.37.

160 kg of toluene was added to the resulting block copolymer solution to bring the polymer concentration to 25% by weight. 1.29 kg of p-toluenesulfonic acid was added to this solution and nitrogen was substituted inside the reaction vessel, followed by agitation for 3 hours at 30°C. The reaction liquid was sampled, and once it was confirmed that the solution was clear and colorless, 2.39 kg of Radiolite #3000 of SHOWA CHEMICAL INDUSTRY CO.,LTD was added. The reaction vessel was then pressurized with nitrogen to 0.1 to 0.4 MPaG, and the solid component was separated using a pressure filter (filtration area 0.45 m²) with polyester felt as the filter material.

1.79 kg of Kyowaad 500SH of KYOWA CHEMICAL INDUSTRY CO., LTD. was added to about 478 kg of the block copolymer solution after filtration, and nitrogen was substituted inside the reaction vessel, followed by agitation for 1 hour at 30°C. The reaction liquid was sampled, and the reaction was ended if the solution was confirmed to be neutral. The reaction vessel was then pressurized to 0.1 to 0.4 MPaG with nitrogen, and the solid component was separated using a pressure filter (filtration area 0.45 m²) with polyester felt as the filter material to obtain a polymer solution.

Following on from the above, the solvent component was evaporated from the polymer solution. A SCP-100 (heating surface 1 m²) of KURIMOTO, LTD. was used as the evaporator. Evaporation of the polymer solution was performed with the heat carrier oil at the evaporator inlet at 180°C, the vacuum of the evaporator at 90 Torr, the screw rotation at 60 rpm, and the polymer solution supplied at a rate of 32 kg/h. The polymer was stranded through a die of φ 4 mm, cooled in a water tank and made into cylindrical pellets with a pelletizer (polymer pellets 1). These pellets were compounded with carbon black (Asahi Carbon Co., Ltd., Asahi #15). A LABOTEX of The Japan Steel Works, LTD. was used as the extruder. The raw materials were supplied in the proportions of 0.3 parts per weight of carbon black per 100 parts by weight of pellets, extruded as strands at a cylinder temperature of 80 to 100°C and a screw rotation of 100 rpm, and then formed into cylindrical pellets with a pelletizer (polymer pellets 2).

### (Manufacturing Example 2)

The polymer pellets 1 obtained in Manufacturing Example 1 were compounded with heavy calcium carbonate (Bihoku Funka Kogyo Co.,Ltd., Softon 3200) and carbon black (Asahi Carbon Co., Ltd., Asahi #15). A LABOTEX of The Japan Steel Works, LTD. was used as the extruder. The raw materials were supplied in the proportions of 43 parts by weight of calcium carbonate and 0.3 parts by weight of carbon black per 100 parts by weight of pellets, extruded as strands at a cylinder temperature of 80 to 100°C and a screw rotation of 100 rpm, and then formed into cylindrical pellets with a pelletizer. The resulting pellets were dry blended with 0.3 parts by weight of silica powder (Tatsumori Microcrystalline Soft Silica A-10).

### (Manufacturing Example 3)

The polymer pellets 1 obtained in Manufacturing Example 1 were compounded with heavy calcium carbonate (Bihoku Funka Kogyo Co.,Ltd., Softon 3200), carbon black (Asahi Carbon Co., Ltd., Asahi #15), silicone oil (Toshiba Silicone Co., Ltd., TSF451-1000) and beef fat super-hardened oil (NOF Corporation). A LABOTEX of The Japan Steel Works, LTD. was used as the extruder. The raw materials were supplied in the proportions of 43 parts by weight of calcium carbonate, 0.3 parts by weight of carbon black, 0.43 parts by weight of silicone oil and 2.86 parts by weight of beef fat super-hardened oil per 100 parts by weight of pellets, extruded as strands at a cylinder temperature of 80 to 100°C and a screw rotation of 100 rpm, and then formed into cylindrical pellets with a pelletizer. 0.3 parts by weight of silica powder (Tatsumori Microcrystalline Soft Silica A-10) was added to the surface of the resulting pellets.

### (Manufacturing Example 4)

79.6 kg of butyl acrylate, 1.75 kg of t-butyl acrylate and 0.692 kg of cuprous bromide was placed in a reaction vessel of 500 L substituted with nitrogen, and agitation was initiated. Next, warm water was supplied to the jacket to raise the temperature of the solution inside to 70°C, at which it was retained for 30 minutes. Next, a solution of 1.21 kg of diethyl 2,5-dibromoadipate dissolved in 7.14 kg of acetonitrile was added, and a temperature rise to 75°C was initiated. Once the internal temperature had reached 75°C, 0.101 L of pentamethyldiethylenetriamine was added to initiate polymerization to obtain the first block.

Once the conversion rate had reached 98%, 106 kg of toluene, 0.478 kg of cuprous chloride, 49.1 kg of methyl methacrylate, 7.98 kg of ethyl acrylate and 0.101 L of pentamethyldiethylenetriamine were added to initiate polymerization to obtain the second block. Once the conversion rate had reached 95%, 250 kg of toluene was added to dilute the reaction liquid and terminate polymerization by cooling the reaction vessel. In GPC analysis, the resulting block copolymer had a number-average molecular weight Mn of 59500 and a molecular weight distribution Mw/Mn of 1.50.

30 kg of toluene was added to the resulting block copolymer solution to bring the polymer concentration to 25% by weight. 2.20 kg of p-toluenesulfonic acid was added to this solution and nitrogen was substituted inside the reaction vessel, followed by agitation for 3 hours at 30°C. The reaction liquid was sampled, and once it was confirmed to be clear and colorless, 2.65 kg of Radiolite #3000 of SHOWA CHEMICAL INDUSTRY CO.,LTD was added. The reaction vessel was then pressurized with nitrogen to 0.1 to 0.4 MPaG, and the solid component was separated using a pressure filter (filtration area 0.45 m²) with polyester felt as the filter material.

1.98 kg of Kyowaad 500SH was added to about 530 kg of the block copolymer solution after filtration, and nitrogen was substituted inside the reaction vessel, followed by agitation for 1 hour at 30°C. The reaction liquid was sampled, and if it was confirmed to be neutral, 1.98 kg of Radiolite #3000 of SHOWA CHEMICAL INDUSTRY CO.,LTD was added. The reaction vessel was then pressurized to 0.1 to 0.4 MPaG with nitrogen, and the solid component was separated using a pressure filter (filtration area 0.45 m²) with polyester felt as the filter material to obtain a polymer solution.

Next, the solvent component was evaporated from the polymer solution. A SCP-100 (heating surface 1 m²) of KURIMOTO, LTD. was used as the evaporator. Evaporation of the polymer solution was performed with the heat carrier oil at the evaporator inlet at 180°C, the vacuum of the evaporator at 90 Torr, the screw rotation at 60 rpm, and the polymer solution supplied at a rate of 32 kg/h. The polymer was stranded through a die of φ 4 mm, cooled in a water tank and made into cylindrical pellets with a pelletizer.

The resulting pellets were then supplied to a biaxial extruder and re-extruded under conditions of 250°C, retention time of 3 minutes. The molten resin was pelletized by underwater cutting (polymer pellets 3).

### (Manufacturing Example 5)

228 kg of butyl acrylate, 12.9 kg of t-butyl acrylate and 2.15 kg of cuprous bromide were placed in a reaction vessel of 2000 L substituted with nitrogen, and agitation was initiated. Next, warm water was supplied to the jacket to raise the temperature of the solution inside to 70°C, at which it was retained for 30 minutes. Next, a solution of 3.60 kg of diethyl 2,5-dibromoadipate dissolved in 20.5 kg of acetonitrile was supplied, and a temperature rise to 75°C was initiated. Once the internal temperature had reached 75°C, 0.313 L of pentamethyldiethylenetriamine was added to initiate polymerization to obtain the first block.

Once the conversion rate had reached 98%, 313 kg of toluene, 1.48 kg of cuprous chloride, 145 kg of methyl methacrylate, 23.6 kg of ethyl acrylate and 0.313 L of pentamethyldiethylenetriamine were added to initiate polymerization to obtain the second block. Once the conversion rate had reached 95%, 400 kg of toluene was added to dilute the reaction liquid and terminate polymerization by cooling the reaction vessel. In GPC analysis, the resulting block copolymer had a number-average molecular weight Mn of 61400 and a molecular weight distribution Mw/Mn of 1.48.

487 kg of toluene was added to the resulting block copolymer solution to bring the polymer concentration to 25% by weight. 7.70 kg of p-toluenesulfonic acid was added to this solution and nitrogen was substituted inside the reaction vessel, followed by agitation for 3 hours at 30°C. The reaction liquid was sampled, and once it was confirmed to be clear and colorless 8.00 kg of Radiolite #3000 of SHOWA CHEMICAL INDUSTRY CO.,LTD was added. The reaction vessel was then pressurized with nitrogen to 0.1 to 0.4 MPaG, and the solid component was separated using a pressure filter (filtration area 0.45 m²) with polyester felt as the filter material.

6.00 kg of Kyowaad 500SH of KYOWA CHEMICAL INDUSTRY CO., LTD. was added to about 1600 kg of the block copolymer solution after filtration, and nitrogen was substituted inside the reaction vessel, followed by agitation for 1 hour at 30°C. The reaction liquid was sampled, and if it was confirmed to be neutral 6.00 kg of Radiolite #3000 of SHOWA CHEMICAL INDUSTRY CO.,LTD was added. The reaction vessel was then pressurized to 0.1 to 0.4 MPaG with nitrogen, and the solid component was separated using a pressure filter (filtration area 0.45 m²) with polyester felt as the filter material to obtain a polymer solution.

Next, the solvent component was evaporated from the polymer solution. A SCP-100 (heating surface 1 m²) of KURIMOTO, LTD. was used as the evaporator. Evaporation of the polymer solution was performed with the heat carrier oil at the evaporator inlet at 180°C, the vacuum of the evaporator at 90 Torr, the screw rotation at 60 rpm, and the polymer solution supplied at a rate of 32 kg/h. The polymer was stranded through a die of φ 4 mm, cooled in a water tank and made into cylindrical pellets with a pelletizer.

The resulting pellets were then supplied to a biaxial extruder and re-extruded under conditions of 250°C, retention time of 3 minutes. The molten resin was pelletized by underwater cutting (polymer pellets 4).

### (Manufacturing Example 6)

Polymer pellets 3 and 4 obtained in Manufacturing Examples 4 and 5 were compounded with heavy calcium carbonate (Bihoku Funka Kogyo Co.,Ltd., Softon 3200), carbon black (Asahi Carbon Co., Ltd., Asahi #15), beef fat super-hardened oil (NOF Corporation), Kaneace FM40 (Kaneka Corporation) and ARUFONUG 4010 (TOAGOSEI CO.,LTD.). A biaxial extruder was used for compounding. The raw materials were supplied in the proportions of 61.6 parts by weight of polymer pellets 3, 13.4 parts by weight of polymer pellets 4, 15 parts by weight of heavy calcium carbonate, 1 part by weight of carbon black, 0.1 part by weight of beef fat super-hardened oil, 10 parts by weight of Kaneace FM40 and 7.5 parts by weight of ARUFONUG 4010, and compounded. The compounded composition was then formed into cylindrical pellets with a pelletizer.

### (Example 1)

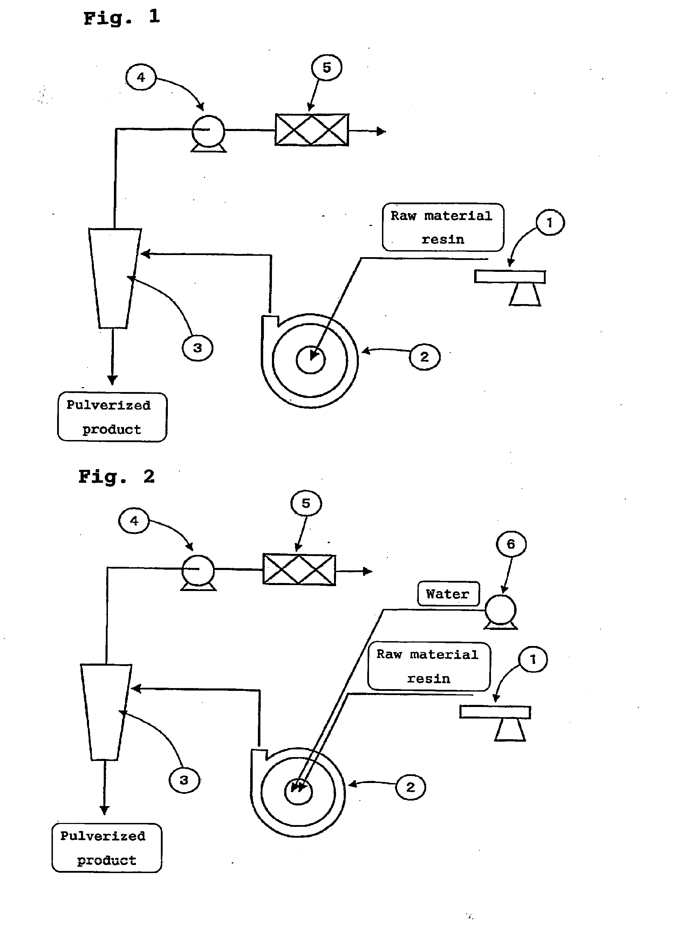

The polymer pellets 2 obtained in Manufacturing Example 1 are pulverized. Figure 1 shows a diagram of the test equipment. The pulverizer is a UCM150 of Mitsui Mining Co., Ltd. (disc diameter 300 mm, motor output 3.7 kW). The raw material pellets are supplied to pulverizer 2 via electromagnetic feeder 1. The raw material pellets and powdered product are conveyed by means of a flow of air produced by blower 4. The powdered product is captured by cyclone 3 and collected. The fine particles pass through the cyclone and are collected by bag filter 5.

The rotational speed of the pulverizer disc is set to 10,000 rpm, and once rotation has stabilized, supply of the raw material pellets with a fixed amount of silica powder added to the surface is initiated. The temperature of a flow of air at the cyclone inlet is measured during pulverization. After a fixed amount of time the supply of raw material pellets is stopped, and the pulverized powder captured by the cyclone is collected. Particle size is measured and powder properties are evaluated using the resulting powder. To evaluate the melting properties of the powder, a skin is also formed at 250° using an embossed metal plate, and underfill or bubbles in the skin are observed. The results are shown in Table 1.

### (Comparative Example 1)

The polymer pellets 2 obtained in Manufacturing Example 1 were freeze-pulverized. After the pellets were cooled enough by liquid nitrogen, a crushed product was obtained by using the pulverizer. The crushed product aggregated somewhat at room temperature. A skin was formed of this product at 250°C using the same embossed metal sheet as in Example 1, and underfill or bubbles in the skin were observed. The results are shown together in Table 1.

**(Table 1)**

| | Example 1 | Comparative Example 1 |
|---|---|---|
| Raw material resin | Manuf. Example 1 | Manuf. Example 1 |
| Added parts of silica | 3.4 | 0 |
| Product recovery (by wt) | 35 | 98.5 |
| Processing rate (kg/h) | -- | -- |
| Exhaust temperature (°C) | 45 | -- |
| Melting inside machine | Yes | Yes |
| POWDER PROPERTIES | | |
| Bulk rel. density (g/mL) | 0.413 | 0.324 |
| Angle of repose (°) | 40.5 | 46.2 |
| Aggregates (%) | -- | Many |
| MELTING PROPERTIES | | |
| Embossing transfer | O | X |
| Uniform skin thickness | O | X |
| Pinholes/bubbles | O | X |

### (Examples 2-4)

The pellets obtained in Manufacturing Example 2 were tested as in Example 1. The results are shown in Table 2.

**(Table 2)**

| | Example 2 | Example 3 | Example 4 |
|---|---|---|---|
| Raw material resin | Manuf. Example 2 | Manuf. Example 2 | Manuf. Example 2 |
| Added parts of silica | 3 | 3 | 3 |
| Product recovery (wt%) | 99.5 | 98.1 | 99.8 |
| Processing speed (kg/h) | 3.91 | 11 | 3.8 |
| Exhaust temperature (°C) | 53 | 55 | 40 |
| Melting inside machine | No | No | No |
| POWDER PROPERTIES | | | |
| Bulk rel. density (g/mL) | 0.468 | 0.439 | 0.498 |
| Angle of repose (°) | 39.7 | 38.1 | 34.4 |
| Aggregates (%) | -- | -- | -- |
| MELTING PROPERTIES | | | |
| Embossing transfer | O | O | O |
| Uniform skin thickness | O | O | O |
| Pinholes/bubbles | O | O | O |

### (Examples 5-7)

The pellets obtained in Manufacturing Example 3 were tested in the same way as in Example 1. The results are shown in Table 3.

**Table 3**

| | Example 5 | Example 6 | Example 7 |
|---|---|---|---|
| Raw material resin | Manuf. Example 3 | Manuf. Example 3 | Manuf. Example 3 |
| Added parts of silica | 3 | 6 | 10 |
| Product recovery (wt%) | 99.9 | 98.6 | 97.5 |
| Processing speed (kg/h) | 5.2 | 4.4 | 4.6 |
| Exhaust temperature (°C) | 56 | 58 | 59 |
| Melting inside machine | No | No | No |
| POWDER PROPERTIES | | | |
| Bulk rel. density (g/mL) | 0.443 | 0.447 | 0.463 |
| Angle of repose (°) | 43.4 | 42.7 | 41.7 |
| Aggregates (%) | 8.5 | 3.6 | 0.9 |
| MELTING PROPERTIES | | | |
| Embossing transfer | O | O | O |
| Uniform skin thickness | O | O | O |
| Pinholes/bubbles | O | O | O |

### (Examples 8-13)

The pellets obtained in Manufacturing Example 6 are pulverized. Figure 2 shows an outline of the test equipment. The pulverizer is a UCM150 of Mitsui Mining Co.,Ltd.(disc dia. 300 mm, motor output 3.7 kW). The raw material pellets are supplied to pulverizer 2 via electromagnetic feeder 1. Cooling water is supplied to pulverizer 2 via constant rate pump 6. The raw material pellets and pulverized product are conveyed on a flow of air produced by blower 4. The pulverized product is captured and collected by cyclone 3. Fine particles passing through the cyclone are collected by bag filter 5.

The disc rotation of the pulverizer is set to 10,000 rpm, and once the rotation has stabilized, supply of the raw material pellets with a fixed amount of silica powder added to the surface is initiated. The air temperature at the cyclone inlet is measured during pulverization. After a fixed amount of time the supply of raw material pellets is stopped, the powder captured by the cyclone is collected, and powder temperature and surface electric potential are measured. The surface temperature of the pulverizing disc is also measured. Particle size is measured and powder properties evaluated using the resulting powder. To evaluate the melting properties of the powder, a skin is also formed at 250° using an embossed metal plate, and underfill or bubbles in the skin are observed. The results are shown in

### Table 4.

**(Table 4)**

| | Ex 8 | Ex 9 | Ex 10 | Ex 11 | Ex 12 | Ex 13 |
|---|---|---|---|---|---|---|
| Raw material resin | ME 6 | ME 6 | ME 6 | ME 6 | ME 6 | ME 6 |
| Added parts of silica | 6 | 6 | 6 | 6 | 6 | 6 |
| Raw material supply rate (kg/h) | 4.7 | 4.7 | 4.6 | 4.3 | 3.9 | 9.2 |
| Water supply rate (kg/h) | 0 | 0.15 | 0.28 | 0.46 | 0.77 | 0.77 |
| Exhaust temperature (°C) | 50.7 | 51.4 | 47.2 | 42.6 | 36.7 | 45.6 |
| Powder temperature (°C) Pulverizing disc temp. (°C) | 43 | 43 | 39 | 36 | 32 | 38 |
| | 40 | 41 | 39 | 34 | 31 | 34 |
| Melting in machine | No | No | No | No | No | No |
| Powder surface electric potential (kV) electric | -10.2 | -5 | -4.7 | -0.06 | -0.1 | -0.2 |
| POWDER PROPERTIES | | | | | | |
| Bulk relative density (g/mL) | 0.3777 | | | 0.378 | | |
| Angle of repose (°) | 39.3 | | | 38.5 | | |
| Coarse particles (>1000 µm) (%) | 0 | | | 0 | | |

### INDUSTRIAL APPLICABILITY

The powder produced by the manufacturing method of the present invention can be used not only in automobile interior parts formed by slush molding, but also for the skins and powder coatings of household appliances and office machines, and for pastes and sealants and the like.

## Claims

1. A method for producing a powder for slush molding obtained by pulverizing a thermoplastic elastomer composition, wherein pulverization is performed by shearing action of a fixed blade and a rotating blade.

2. The method for producing a powder for slush molding according to Claim 1, wherein the thermoplastic elastomer composition comprises an acrylic block copolymer (A).

3. The method for producing a powder for slush molding according to Claim 2, wherein 2 to 20 parts by weight of at least one selected from the group consisting of calcium carbonate, talc, kaolin, silicon dioxide, fatty acid amides, fatty acid esters and metal soaps is added externally to 100 parts by weight of the composition comprising the acrylic block copolymer (A) before pulverization.

4. The method for producing a powder for slush molding according to Claim 2 or 3, wherein the acrylic block copolymer (A) is a block copolymer consisting of 50 to 90% by weight of an acrylic polymer block (a) and 50 to 10% by weight of a methacrylic polymer block (b).

5. The method for producing a powder for slush molding according to any one of Claims 2 through 4, wherein the acrylic polymer block (a) is a block formed by polymerization of a monomer having as its principal component at least one selected from the group consisting of n-butyl acrylate, ethyl acrylate, 2-methoxyethyl acrylate and 2-ethylhexyl acrylate, while the methacrylic polymer block (b) is a block formed by polymerization of a monomer having methyl methacrylate as its principal component.

6. The method for producing a powder for slush molding according to any one of Claims 2 through 5, wherein the composition comprising acrylic block copolymer (A) comprises 10 to 100 parts by weight of calcium carbonate powder mixed with 100 parts by weight of the acrylic block copolymer (A).

7. The method for producing a powder for slush molding according to any one of Claims 2 through 6, wherein the composition comprising the acrylic block copolymer (A) comprises 0.1 to 10 parts by weight of silicone oil mixed with 100 parts by weight of the acrylic block copolymer (A).

8. The method for producing a powder for slush molding according to any one of Claims 2 through 7, wherein 2 to 20 parts by weight of water per 100 parts by weight of the composition comprising the acrylic block copolymer (A) is supplied during pulverization.
